# EUROPEAN PATENT APPLICATION

(11) **EP 3 032 681 A1**
(43) Date of publication of application: **15.06.2016**
(21) Application number: 14833624.1
(22) Date of filing: 30.07.2014
(51) Int. Cl.: H02J 3/32

(54) **POWER SUPPLY SYSTEM AND DISCHARGE DEVICE**

(30) Priority: 07.08.2013 JP 2013164308
(71) Applicant: Panasonic Intellectual Property Management Co., Ltd., Osaka-shi, Osaka 540-6207 (JP)
(72) Inventor: ADACHI, Masakazu, Chuo-ku, Osaka-shi Osaka 540-6207 (JP); SHINAGAWA, Mikio, Chuo-ku, Osaka-shi Osaka 540-6207 (JP)
(74) Representative: Appelt, Christian W.
(86) International application number: PCT/JP2014/004011
(87) International publication number: WO 2015/019582

(57) **Abstract**

An object is to achieve discharging of electric power of a battery mounted in an electric vehicle to a power wiring so as to match with an amount of electric power consumed in a facility of a consumer, even when the electric vehicle is away from the facility of the consumer. A meter device (10) measures an amount of electric power received by a facility (1) of a consumer from a power grid (51). A discharge device (20) supplies, to a power wiring (50), electric power of a battery (41) for travelling, which is mounted in an electric vehicle (40). A control device (30) controls the discharge device (20) so as to adjust an amount of electric power to be supplied to the power wiring (50) from the battery (41). A communication portion (31) of the control device (30) acquires, through communication with the meter device (10), information regarding an amount of electric power measured by the meter device (10). An adjustment portion (32) of the control device (30) adjusts the amount of electric power to be supplied from the battery (41) to the power wiring (50) so as to be equal to an amount of electric power corresponding to at least part of the amount of electric power measured by the meter device (10).

## Description

### TECHNICAL FIELD

The invention relates generally to power supply systems and discharge devices and, more particularly, to a power supply system of supplying, to a power wiring, electric power of a battery for travelling, which is mounted in an electric vehicle, and a discharge device for this power supply system.

### BACKGROUND ART

In recent years, an electric vehicle becomes popular. The electric vehicle mounts a battery for travelling, which has a relatively large capacity. On the other hand, according to statistics, an average mileage per day of private cars is less than 30 km. Therefore, depending on a type of battery mounted in the electric vehicle, a capacity of the battery often remains sufficient to the average mileage per day.

For this reason, there has been proposed a technology capable of supplying, to a wiring network of a consumer's facility, electric power of the electric vehicle so that an electric load(s) can consume the electric power of the electric vehicle in the consumer's facility (e.g.,, refer to Document 1: JP 2008-54439 A and Document 2: JP 2013-27214 A). Document 1 discloses a technology that an electric vehicle with an electric storage device is electrically connected to a house, and generates commercial power to supply it to the house. Document 2 also discloses a technology that a charging station is connected to an AC power line wired to a building, and power stored in an on-vehicle electric storage device is discharged to the AC power line.

According to the technologies disclosed in Documents 1 and 2, it is possible to control charging and discharging of the electric vehicle depending on a power supply to the house and a power consumption in the house, and also possible to determine a schedule for charging and discharging, based on prediction data regarding an amount of consumption and an amount of generation power during a prediction period.

However, if power of a storage battery mounted in the electric vehicle is desired to be utilized in the house (the consumer's facility), the electric vehicle needs to be connected to a power wiring of the consumer's facility. That is, when the electric vehicle is away from the consumer's facility, the power of the storage battery in the electric vehicle cannot be utilized in the consumer's facility.

### SUMMARY OF THE INVENTION

It is an object of the present invention to provide a power supply system capable of applying electric power of a battery mounted in an electric vehicle to electric power consumed in a facility of a consumer even when the electric vehicle is away from the facility of the consumer, and a discharge device for this power supply system.

A power supply system according to an aspect of the present invention includes: a meter device that measures an amount of electric power received by a facility of a consumer from a power grid; a discharge device that supplies, to a power wiring, electric power of a battery for travelling, which is mounted in an electric vehicle; and a control device that controls the discharge device so as to adjust an amount of electrical power to be supplied to the power wiring from the battery. The control device includes: a communication portion that acquires, through communication with the meter device, information regarding an amount of electric power measured by the meter device; and an adjustment portion that adjusts the amount of electric power to be supplied from the battery to the power wiring so as to be equal to an amount of electric power corresponding to at least part of the amount of electric power measured by the meter device.

A discharge device according to an aspect of the present invention is used for the power supply system described above, and includes the adjustment portion.

### BRIEF DESCRIPTION OF THE DRAWINGS

FIG. 1 is a block diagram illustrating Embodiment 1;
FIG. 2 is a schematic diagram of Embodiment 1;
FIG. 3 is an operational explanatory diagram of Embodiment 1;
FIG. 4 is an operational explanatory diagram of Embodiment 1; and
FIG. 5 is a block diagram illustrating Embodiment 2.

### DESCRIPTION OF EMBODIMENTS

### (Outline)

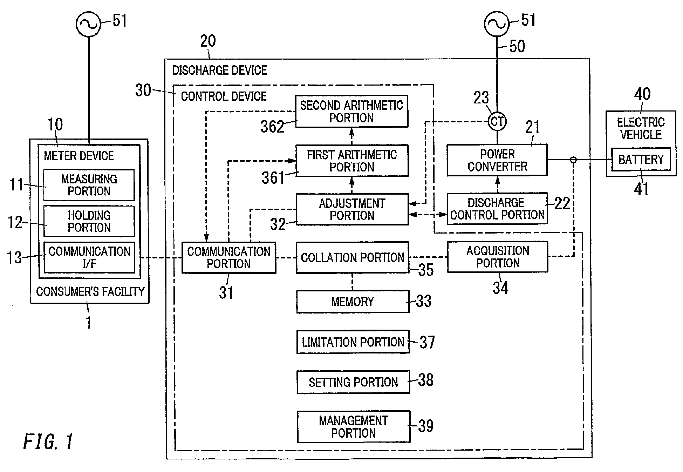

A power supply system described in Embodiments below is, as shown in FIG. 1, includes a meter device 10, a discharge device 20 and a control device 30. The meter device 10 measures an amount of electric power received by a facility 1 of a consumer from a power grid 51. The discharge device 20 supplies, to a power wiring 50, electric power of a battery 41 for travelling, which is mounted in an electric vehicle 40. The control device 30 controls the discharge device 20 so as to adjust an amount of electric power to be supplied to the power wiring 50 from the battery 41. The control device 30 includes a communication portion 31 and an adjustment portion 32. The communication portion 31 acquires, through communication with the meter device 10, information regarding an amount of electric power measured by the meter device 10. The adjustment portion 32 adjusts the amount of electric power to be supplied from the battery 41 to the power wiring 50 so as to be equal to an amount of electric power corresponding to at least part of the amount of electric power measured by the meter device 10.

According to this configuration, the control device 30 acquires, from the meter device 10, the information regarding the amount of electric power received by the facility 1 of the consumer from the power grid 51. Further, the control device 30 adjusts the amount of electric power to be supplied to the power wiring 50 from the battery 41 for travelling, which is mounted in the electric vehicle 40 so as to be equal to the amount of electric power corresponding to at least part of the amount of electric power measured by the meter device 10. Therefore, it is possible to discharge, to the power wiring 50, electric power of the battery 41 mounted in the electric vehicle 40 so as to match with an amount of electric power consumed in the facility 1 of the consumer, even when the electric vehicle 40 is away from the facility 1 of the consumer. As a result, the electric power of the battery 41 mounted in the electric vehicle 40 is applied to at least part of the amount of electric power received by the facility 1 of the consumer from the power grid 51. Therefore in the power supply system, a state where supply and demand of power are balanced in the power grid 51 is hardly disturbed, and thereby the power supply system contributes to stabilization in a voltage and a frequency of the power grid 51.

It is preferable that the discharge device 20 be arranged away from the facility 1 of the consumer, the discharge device 20 being electrically connected to the power grid 51 through the power wiring 50, and also electrically connected to the battery 41. According to this configuration, when focusing on only a relationship between supply and demand of power, even if the facility 1 and the electric vehicle 40 exist in two points away from each other, supplying of power in such a case is equivalent to supplying of the power of the battery 41 mounted in the electric vehicle 40 to an electric load(s) in the facility 1.

The control device 30 preferably further includes a memory 33, an acquisition portion 34 and a collation portion 35. The memory 30 stores first identification information for identifying the facility 1 of the consumer and second identification information for identifying the electric vehicle 40 in association with each other. The acquisition portion 34 acquires the second identification information from the electric vehicle 40 when the electric vehicle 40 is connected to the discharge device 20. The collation portion 35 collates the second identification information acquired by the acquisition portion 34 with the second identification information stored in the memory 33 to identify the facility 1 of the consumer having the first identification information associated with the second identification information stored in the memory 33. In this case, the adjustment portion 32 preferably adjusts the amount of electric power to be supplied from the battery 41 to the power wiring 50 so as to be equal to an amount of electric power corresponding to at least part of an amount of electric power received by the facility 1 of the consumer that is identified by the collation portion 35.

The control device 30 preferably further includes: a first control device 30A that includes the memory 33, the acquisition portion 34 and the collation portion 35; and a second control device 30B that includes the adjustment portion 32, and is to be attached to the discharge device 20.

It is preferable that the acquisition portion 34 have a function of acquiring an identification information used for an electronic toll collection system, and the identification information used for the electronic toll collection system be defined as the second identification information. Also, the adjustment portion 32 preferably adjusts, as a target, the amount of electric power to be supplied to the power wiring 50 from the battery 41 during a predetermined period so as to make the amount of electric power to be supplied to the power wiring 50 from the battery 41 equal to the amount of electric power measured by the meter device 10.

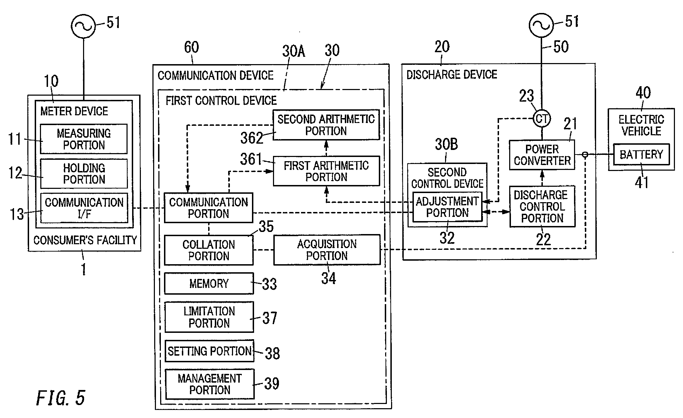

The control device 30 preferably includes a first arithmetic portion 361 and a second arithmetic portion 362 as shown in FIG. 5. The first arithmetic portion 361 calculates a differential electric power corresponding to a difference between the amount of electric power supplied to the power wiring 50 from the battery 41 and the amount of electric power measured by the meter device 10 during the predetermined period. The second arithmetic portion 362 reflects the differential electric power calculated by the first arithmetic portion 361 to an electricity price.

The control device 30 preferably further includes a limitation portion 37 that limits at least one of a rate of change or a peak value, of the electric power to be supplied to the power wiring 50 from the electric vehicle 40. Moreover, the control device 30 preferably further includes: a setting portion 38 that sets a lower limit regarding a remaining capacity of the battery 41; and a management portion 39 that stops supplying of electric power to the power wiring 50 from the battery 41 when the remaining capacity of the battery 41 has reached the lower limit. When receiving information regarding a planned travel distance for the electric vehicle 40, the setting portion 38 preferably has functions of: calculating the remaining part of the battery 41 required to travel the planned travel distance; and setting the lower limit based on a calculated remaining capacity of the battery 41.

Preferably, the discharge device 20 is used for the power supply system described above, and includes the adjustment portion 32.

Hereinafter, a case where a facility 1 of a consumer is a house (a detached house or dwelling units of an apartment house) will be described as an example, but the facility 1 may be an office in a building, a tenant or the like. Also, a case where a user (a resident) of the facility 1 has the electric vehicle 40 will hereinafter be assumed and described. However, if two or more users share one electric vehicle 40 in an office building or an apartment house, a technology described below is applicable by regarding the entire office building or the entire apartment house as a facility 1.

The electric vehicle 40 may be a vehicle with the battery 41 as an energy source for travelling, such as an electric car, a plug-in hybrid vehicle, a fuel cell electric vehicle, an electric motorcycle or the like. Therefore, the battery 41 for travelling, mounted in the electric vehicle 40, may be a storage battery mounted in the electric car or the plug-in hybrid vehicle, or also may be a fuel cell mounted in the fuel cell electric vehicle. Hereinafter, a case will be described, where the electric vehicle 40 is the electric car or the plug-in hybrid vehicle and the battery 41 is the storage battery.

Further, a usage form that the electric vehicle 40 is utilized in a daytime and the battery 41 (storage battery) is charged at night will be described below as an example. When the consumer's facility 1 is provided with a solar power generation device, the battery 41 may be charged with electric power generated by the solar power generation device, before using the electric vehicle 40. Examples of such the usage form include a usage form of charging the battery 41 in a morning to use the electric vehicle 40 in that afternoon, and a usage form of charging the battery 41 on a previous day to use the electric vehicle 40 on that following day.

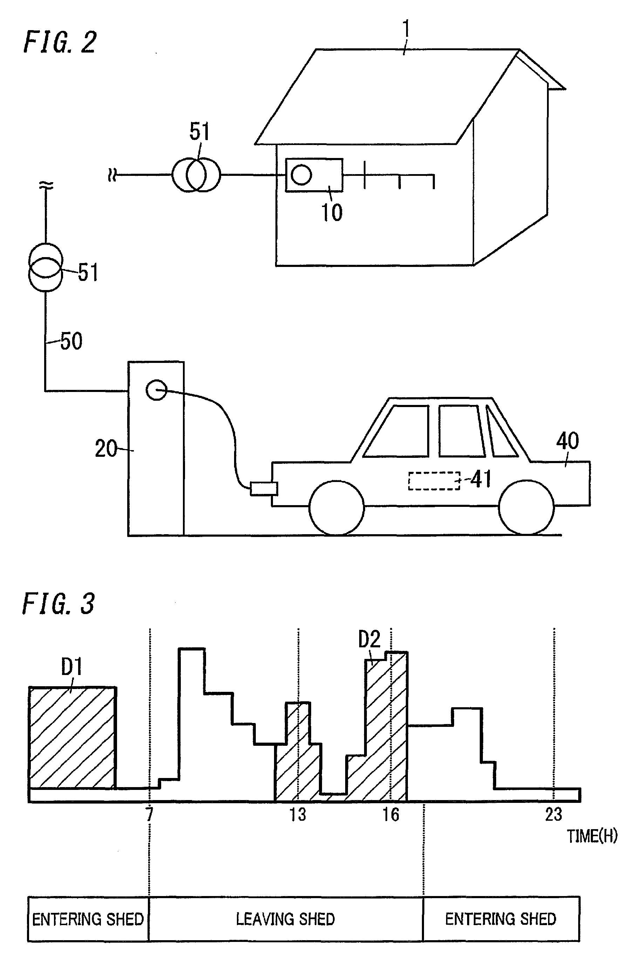

In an example as shown in FIG. 3, the battery 41 (storage battery) is charged with electric power (a region D1) at night (0:00 to 6:00). In FIG. 3, a vertical axis denotes electric power. Also shown, in an example of going out in a daytime (7:00 to 18:00), using the electric vehicle 40, by connecting the electric vehicle 40 to the discharge device 20 during a time period of 12:00 to 16:30, it is possible to supply power to the power wiring 50 from the battery 41. During this time period (12:00 to 16:30), power received by the consumer's facility 1 is changed as shown by a region D2. In the illustrated example, power discharged from the battery 41 follows power received by the facility 1, and power received by the facility 1 in the region D2 is equal to power to be supplied to the power wiring 50 from the discharge device 20.

The power wiring 50 is, as one example, an outdoor wiring network (namely, the power grid 51) that does not belong to the consumer's facility 1, but may be also an indoor wiring network connected to the power grid 51. For example, it is also possible to supply power of the battery 41 mounted in the electric vehicle 40 owned by the user of the facility 1 to a power wiring 50 inside another facility 1. In this case, in another facility 1 supplied the power from the battery 41 of the electric vehicle 40, the power to be received by the power grid 51 is reduced, and accordingly it means that power substantially requested to the power grid 51 is reduced.

Since the configuration described above is adopted, in a case where power may be tight due to an increase in demand to the power grid 51, it is possible to supply power to the facility 1 from the battery 41 of the electric vehicle 40, and accordingly reduce power to be received by the facility 1. That is, the demand to the power grid 51 is substantially reduced, and thereby contributing to stabilization in a voltage and a frequency of the power grid 51.

The control device 30 can have a configuration of being attached to the discharge device 20. Note that, as shown in FIG. 5, the control device 30 may be configured by a first control device 30A that manages the consumer's facility 1 and the electric vehicle 40, and a second control device 30B that controls an operation of the discharge device 20. The first control device 30A includes a communication device 60 (e.g., a server) capable of communicating with the meter device 10 and the discharge device 20. The second control device 30B is attached to the discharge device 20.

Comparing this configuration with a configuration that an individual discharge device 20 includes with a control device 30, the first control device 30A can collectively manage information regarding the consumer's facility 1 and the electric vehicle 40, and this type of personal information is not distributed, and accordingly it is easy to manage such personal information. Also, since the second control device 30B is attached to the discharge device 20, it is possible to control supplying of power to the power wiring 50 from the battery 41 in real time without delay.

Although not described below, when there is an aggregator to aggregate facilities 1 of consumers, the aggregator may aggregately receive power at a high voltage, and distribute the power to the facilities 1 of the consumers. In this case, the meter device 10 may be configured to measure an amount of power aggregately received at the high voltage by the aggregator. This aggregator may be concurrently a service provider described below.

The discharge device 20 may include an input device (not shown) that receives an input of at least one of the first identification information for identifying the consumer's facility 1 or the second identification information for identifying the electric vehicle 40. That is, two or more data sets of the first identification information are respectively given so as to correspond to the facilities 1 of the consumers individually, and are denoted by, for example, numerical sequences or character strings. Two or more data sets of the second identification information are respectively given so as to correspond to the electric vehicles 40 individually, and are denoted by, for example, numerical sequences or character strings. The input device may be for example configured to: receive key input such as ten-key input; read a magnetic card or an IC card; or read an IC chip built into a communication apparatus such as a mobile phone. The input device generally may be configured to receive only an input of the second identification information, but if the first identification information is able to be input, the input device communicates with the necessary meter device 10 after confirming through the control device 30 a combination of the first identification information and the second identification information, and accordingly reliability is enhanced.

### (Embodiment 1)

As shown in FIGS. 1 and 2, a meter device 10 that measures an amount of power received by a consumer's facility 1 from a power grid 51 is installed at the facility 1. In other words, the meter device 10 measures an amount of power that is supplied to the facility 1 from the power grid 51 and consumed in the facility 1, namely, an amount of power that is consumed by an electric load(s) (equipment and/or apparatus) provided in the facility 1. The meter device 10 is preferably configured to use, as a measuring portion 11, a power meter installed in the facility 1 for an electric utility to charge a user (resident) of the facility 1. That is, the measuring portion 11 is preferably configured to: acquire information regarding an amount of power from the power meter; and perform processing such as integration for the information acquired from the power meter as necessary. However, the measuring portion 11 may be configured to measure the amount of power received from the power grid 51 on a primary side of a distribution board (not shown).

The measuring portion 11 preferably acquires an amount of power per unit time (selected from such as 30 seconds, 1 minute, 5 minutes, 10 minutes, 15 minutes and 30 minutes). The measuring portion 11 may measure an amount of power per relatively short unit time (such as 30 seconds or 1 minute) as instantaneous power, and also may calculate a transition of the instantaneous power and integral power consumption during a relatively long unit time (such as 10 minutes, 15 minutes or 30 minutes), per the long unit time. That is, the amount of power measured by the meter device 10 includes the amount of power per relatively short unit time (instantaneous power) and the integral power consumption per relatively long unit time.

The meter device 10 includes a holding portion 12 holding identification information (first identification information) assigned to the consumer's facility 1. Data sets of the first identification information are respectively assigned to facilities 1 of consumers beforehand so as to be different from each other. The first identification information is managed by the electric utility that operates the control device 30. This type of electric utility is not limited to a general electric utility such as a power company, but may be a Power Producer and Supplier (PPS), a Specified Electric Utility or an Independent Power Producer (IPP). Otherwise, the control device 30 may be managed by an aggregator.

The meter device 10 includes a communication interface portion 13 (hereinafter, described as "communication I/F"). The communication I/F 13 has a function of communicating with the control device 30 through a telecommunications line (not shown) such as the Internet. When receiving a request from the control device 30, the communication I/F 13 delivers information regarding an amount of power measured by the meter device 10 and the first identification information to the control device 30.

On the other hand, a discharge device 20 is arranged in a facility for parking an electric vehicle 40. Examples of this type of facility include: parking places of facilities such as a commercial facility, a hospital, a hotel, an airport, a sports facility and the like; a public parking place; a coin-operated parking place; a parking place of an apartment house; and the like.

The discharge device 20 includes a cable (not shown) and a connector (not shown) to be electrically connected to a battery 41 (in this case, a storage battery) mounted in the electric vehicle 40. The connector is configured so as to be detachable to an inlet provided in the electric vehicle 40. The discharge device 20 is connected to a power wiring 50 (in this case, a power grid 51). The discharge device 20 of the present embodiment performs only discharging of the battery 41, but a charge and discharge device may be configured by adding a function of the discharge device 20 of the present embodiment to a charge device that charges the battery 41.

The discharge device 20 includes: a power converter 21 that converts DC power of the battery 41 mounted in the electric vehicle 40 into AC power capable of supplying to the power wiring 50; and a discharge control portion 22 that controls the power converter 21 in accordance with a content to be directed by the control device 30. In the illustrated example, the control device 30 is attached to the discharge device 20. However, the control device 30 is not required to share a casing with the discharge device 20, and may be housed in a different casing from a casing of the discharge device 20. Also, one control device 30 may control two or more discharge devices 20.

The discharge device 20 is provided with a current transformer 23 in an outlet to the power wiring 50 from the power converter 21 so as to monitor power to be supplied to the power wiring 50 from the power converter 21. The current transformer 23 has a configuration that a coil for detecting is winded to a core having a ring shape such as a toroidal core, and is arranged so that an output corresponding to a current output to the power wiring 50 from the power converter 21 is obtained from the coil. The output of the current transformer 23 is provided to the control device 30, and used for controlling of power to be output from the power converter 21.

The control device 30 includes a communication portion 31 that communicates with the meter device 10. The communication portion 31 acquires, through communication with the meter device 10, information regarding an amount of power measured by the meter device 10 and the first identification information held by the meter device 10. That is, the communication portion 31 acquires information regarding the amount of power received by the consumer's facility 1 from the power grid 51 and the first identification information associated with the facility 1. The control device 30 also includes an adjustment portion 32 that adjusts an amount of power to be supplied from the battery 41 to the power wiring 50. In other words, the adjustment portion 32 adjusts the amount of power to be supplied to the power grid 51 via the power wiring 50 from the battery 41. The adjustment portion 32 instructs the discharge control portion 22 so as to adjust the amount of power to be supplied from the battery 41 to the power wiring 50 in accordance with the information regarding the amount of power acquired by the communication portion 31 from the meter device 10.

The control device 30 includes an acquisition portion 34 that acquires identification information (second identification information) of the electric vehicle 40 in a state where the discharge device 20 is electrically connected to the battery 41 mounted in the electric vehicle 40. Data sets of the second identification information are respectively assigned to electric vehicles 40 beforehand so as to be different from each other. It is possible to use information registered in such as an Electronic Control Unit (ECU) mounted in each electric vehicle 40, as the second identification information.

If identification information used for an Electronic Toll Collection System (ETC) can be applied, the identification information may be used as the second identification information. The ETC in this case is, for example, a system that automatically settles a fee at a time of using a highway, and performs wireless communication between a communication apparatus installed in the highway and an ETC on-board unit mounted in each electric vehicle 40, and accordingly the fee is settled in the system. When the identification information of the ETC is used, the acquisition portion 34 of the control device 30 is required to have a function of acquiring the identification information of the ETC. In the same manner, identification information of the electric vehicle 40 according to a CHAdeMO (trademark) standard may be used.

In this way, when a configuration of automatically acquiring the second identification information regarding the electric vehicle 40 is adopted, a manual operation of assigning the second identification information is not required, and accordingly it can be easy to supply the power from the battery 41 to the power wiring 50.

The control device 30 includes a memory 33 that stores the first identification information and the second identification information in association with each other. The memory 33 previously stores the second identification information acquired by the acquisition portion 34 from the electric vehicle 40 and the first identification information of the meter device 10 installed in a facility 1 of a user having the electric vehicle 40 in association with each other.

A collation portion 35, which is provided in the control device 30, collates the second identification information acquired from the electric vehicle 40 with the second identification information stored in the memory 33 to extract the first identification information corresponding to the second identification information stored in the memory 33. That is, the collation portion 35 extracts a data set of the first identification information corresponding to a data set of the second identification information matching with a data set of the second identification information acquired from the electric vehicle 40, among two or more data sets of the second identification information stored in the memory 33. Therefore, when the second identification information is acquired from the electric vehicle 40, the collation portion 35 collates the second identification information with the second identification information stored in the memory 33, and accordingly the facility 1 of the user having the electric vehicle 40 is identified.

As described above, the control device 30 acquires the second identification information from the electric vehicle 40 to identify the facility 1 of the user having the electric vehicle 40. The communication portion 31 of the control device 30 acquires information regarding the amount of power received by the facility 1 from the power grid 51, and accordingly the adjustment portion 32 adjusts an amount of power to be supplied to the power wiring 50 from the discharge device 20 in accordance with the amount of power regarding the facility 1.

According to the configuration described above, the adjustment portion 32 adjusts the amount of power to be supplied to the power wiring 50 from the discharge device 20 so as to be equal to an amount of power corresponding to at least part of the amount of power measured by the meter device 10 in the facility 1 of the user that has the electric vehicle 40. That is, the amount of power to be supplied to the power wiring 50 from the discharge device 20 is adjusted, as a target, so as to make it equal to the amount of power measured by the meter device 10 of the facility 1.

The adjustment portion 32 preferably matches an instantaneous value of the power to be supplied to the power wiring 50 from the discharge device 20 and an instantaneous value of the power received by the consumer's facility 1. In this case, an instantaneous value of the power means an amount of electric power per short time such as about 30 seconds or 1 minute in fact. When this configuration is adopted, communication traffic is increased between the meter device 10 and the control device 30, and accordingly this configuration is adopted when a communication band is secured between the meter device 10 and the control device 30.

The adjustment portion 32 instructs the discharge control portion 22 to match, during a predetermined period, the amount of power to be supplied to the power wiring 50 from the discharge device 20 and the amount of power received by the facility 1. The predetermined period may be, for example, 15 minutes, 30 minutes or an hour. It is also possible to match those amounts per unit such as a day, a week or a month, but because the electric vehicle 40 moves, an amount of power consumed in the facility 1 and an amount of power discharged from the battery 41 are required to be stored. A device that stores information regarding an amount of power is provided at the facility 1 of the consumer having the electric vehicle 40, or a communication device 60 described later (refer to FIG. 5).

The present embodiment adopts a configuration that an amount of power per 30 minutes to be supplied to the power wiring 50 from the discharge device 20 is adjusted so as to make the amount of electric power per 30 minutes equal to an amount of power per 30 minutes received by the consumer's facility 1. However, information regarding an amount of power acquired from the meter device 10 by the adjustment portion 32 relates to an amount of power for the past 30 minutes. Therefore, the adjustment portion 32 controls an operation of the discharge control portion 22 to match: an amount of power for 30 minutes after acquiring the information regarding an amount of power from the meter device 10; and an amount of power received by the facility 1 for the past 30 minutes.

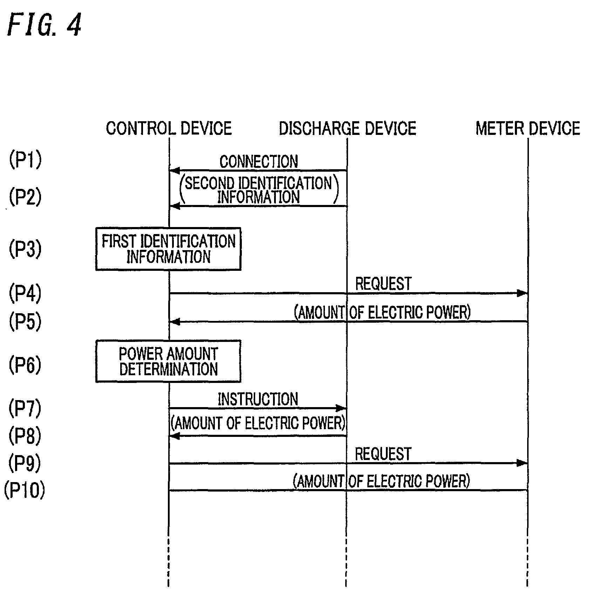

This operation example is shown in FIG. 4. When the control device 30 is noticed that the electric vehicle 40 is connected to the discharge device 20 (P1), the control device 30 acquires the second identification information (P2), and then extracts the first identification information corresponding to the second identification information (P3). Next, the control device 30 requests information of an amount of power received by the consumer's facility 1 to the meter device 10 of the consumer's facility identified in accordance with the first identification information (P4), and then acquires the information of the amount of power (P5).

The control device 30 determines an amount of power to be discharged in accordance with the information regarding the amount of power acquired from the meter device 10 (P6), and then instructs the discharge control portion 22 of the amount of power to be discharged from the battery 41 (P7). Note that, before determining the amount of power to be discharged from the battery 41, it is essential to acquire information regarding a remaining capacity of the battery 41 from the electric vehicle 40 (or the discharge device 20).

Then, the control device 30 acquires information regarding an amount of power supplied to the power wiring 50 from the discharge device 20 (P8), and again acquires the amount of power from the meter device 10 (P9, P10). Thereafter, until the electric vehicle 40 is detached from discharge device 20, the same processing is repeated.

During the predetermined period (30 minutes in the above example), the following processing may be performed so that the amount of power to be supplied to the power wiring 50 from the discharge device 20 is made equal to the amount of power received by the consumer's facility 1. That is, the control device 30 may acquire the information of the amount of power from the meter device 10 per fixed time (1 minute, 5 minutes or 10 minutes) shorter than the predetermined period to match those amounts, using a moving average value of amounts of power per this fixed time. If the control device 30 acquires the information regarding the amount of power from the meter device 10 per 30 minutes, adjusting of the amount of power to be supplied to the power wiring 50 from the discharge device 20 is delayed 30 minutes. On the other hand, the time delay is substantially reduced by this processing. Also, fluctuation in the amount of power to be supplied to the power wiring 50 from the discharge device 20 is suppressed by this processing.

In the configuration described above, the amount of power to be supplied to the power wiring 50 from the discharge device 20 is adjusted based on the amount of power received by the facility 1. Therefore, when focusing on only a relationship between supply and demand of power, the above supplying is equivalent to supplying of power from the battery 41 of the electric vehicle 40 to an electric load(s) in the facility 1. In other words, since the discharge device 20 supplies an amount of power corresponding to the amount of power received by the facility 1 to the power wiring 50, although the time delay is caused, the amount of power received from the power grid 51 and the amount of power supplied to the power grid 51 are offset each other.

For this reason, when a user of the facility 1 charges the battery 41 of the electric vehicle 40 with low-cost power such as nighttime power or power generated by a solar power generation apparatus, it is possible to expand a difference between a revenue obtained by supplying the power of the battery 41 to the power wiring 50 in the case of using the low-cost power and a revenue in a case of using not low-cost power. That is, the cost to obtain the revenue is reduced, and accordingly, the user of the facility 1 practically obtains the profit.

When a service provider that manages supplying and receiving of power performs mediation between the electric utility that supplies power and the user, it is possible to collect the electricity price from the user so that supplying of power in such a case is equivalent to supplying of power from the electric vehicle 40 to the electric load(s) at the user's house (facility 1). That is, the service provider manages the amount of power received by the facility 1 from the power grid 51 and the amount of power supplied to the power wiring 50 from the electric vehicle 40 of the user of the facility 1, and when those amounts are equal to each other, the electricity price is offset for the user of the facility 1. The service provider pays the electric utility that supplies power a price corresponding to the amount of power consumed by the facility 1, and receives a price corresponding to the amount of power supplied to the power wiring 50 from the discharge device 20. Note that, the service provider may be the electric utility that supplies power to the facility 1 through the power grid 51.

In order to perform the processing described above by the service provider, the control device 30 preferably includes a first arithmetic portion 361 that manage an amount of power, and a second arithmetic portion 362 that manage an electricity price.

The first arithmetic portion 361 calculates a differential electric power corresponding to a difference between the amount of power supplied to the power wiring 50 from the battery 41 and the amount of power measured by the meter device 10 during a predetermined period. That is, the first arithmetic portion 361 calculates the differential electric power corresponding to the difference between the amounts of power during this predetermined period, based on the amount of power received by the communication portion 31 from the meter device 10 and an output of the current transformer 23 provided at the discharge device 20. In the above example, because the amount of power received by the facility 1 is equivalent to the amount of power supplied to the power wiring 50 by the discharge device 20, the differential electric power becomes zero. A case where the differential electric power does not become zero will be described later. This predetermined period may be the same as the above-mentioned predetermined period, but because the electricity price is determined based on the amount of power during this predetermined period, a period (e.g., one month) for charging the electricity price may be used as a unit.

The second arithmetic portion 362 determines the electricity price for charging to a user of the facility 1 in consideration of the differential electric power calculated by the first arithmetic portion 361. Note that, as described above, power supplying of the discharge device 20 is delayed to a time when the facility 1 received power. Accordingly, when an electricity price in a time band during which the discharge device 20 supplies power is different from that in a time band during which the facility 1 receives power, it is required to separately set a rule regarding a method of calculating an electricity price that is charged to the facility 1.

Note that, when the service provider exists, the service provider supplies, via the power wiring 50, power to the electric utility that supplies power, and accordingly can obtain revenue by selling power. Currently, because the revenue obtained by selling power is more than the cost caused by purchasing power, the service provider can obtain the profit by supplying power from the electric vehicle 40 to the power wiring 50. Thus, the service provider may give the user of the facility 1 an appropriate gift, instead of reflecting the amount of power supplied from the electric vehicle 40 to the power wiring 50 to an electricity price that is collected from the user of the facility 1, as described above.

The battery 41 mounted in the electric vehicle 40 is for travelling, and accordingly an amount of power capable of supplying to the power wiring 50 by discharging the battery 41 is limited in accordance with a planned travel distance for the electric vehicle 40. In other words, the amount of power capable of supplying to the power wiring 50 is only surplus power obtained by subtracting power, which will be required for travelling, from the remaining capacity. Accordingly, if the amount of power received by the facility 1 is more than the surplus power, it is impossible to make an amount of power equal to the amount of power received by the facility 1.

Therefore, the control device 30 preferably includes a setting portion 38 to set a lower limit regarding a remaining capacity of the battery 41. In this case, the control device 30 also includes a management portion 39 that stops supplying of power to the power wiring 50 from the battery 41 when the remaining capacity of the battery 41 has reached the lower limit set by the setting portion 38. A user can perform setting of the lower limit by the setting portion 38, using a Man-machine interface (an input device, a display device).

When the planned travel distance for the electric vehicle 40 is determined and it is possible to acquire information regarding the planned travel distance with a car navigation system and the like in the setting portion 38, the setting portion 38 calculates the lower limit regarding the remaining capacity of the battery 41 based on the planned travel distance. That is, the setting portion 38 has functions of: calculating the remaining capacity of the battery 41 required for the planned travel distance; and setting the lower limit so as to have a margin in the calculated remaining capacity. In this way, with the configuration that the setting portion 38 automatically sets the lower limit regarding the remaining capacity of the battery 41, it is possible to supply, to the power wiring 50 from the battery 41, the amount of the power that matches the amount of power received by the facility 1 without for the user's burden of managing the remaining capacity of the battery 41.

Furthermore in a case where the amount of power received by the facility 1 has been suddenly increased, when an amount of power to be discharged from the battery 41 is suddenly changed, stress is applied to the battery 41, and accordingly, there is a possibility of accelerating in deterioration of the battery 41. Therefore, it is essential to limit a rate of change of the power upon discharging. In addition, when a peak value of the amount of power received by the facility 1 exceeds a peak value of power capable of supplying from the battery 41, the battery 41 is over loaded, and accordingly it is essential to limit a peak value of the power upon discharging. Therefore, the control device 30 preferably includes a limitation portion 37 that limits at least one of a rate of change or a peak value regarding electric power, of which the adjustment portion 32 instructs the discharge control portion 22. Note that, the rate of change in this case denotes a rate of change for a magnitude of electric power per unit time.

As described above, even when an amount of power from the battery 41 mounted in the electric vehicle 40 is adjusted, as a target, so that an amount of power to be supplied to the power wiring 50 through the discharge device 20 is made equal to an amount of power received by the facility 1, it may be actually impossible to match those amounts with each other due to various causes. That is, the differential electric power calculated by first arithmetic portion 361 may not become zero, and therefore, an electricity price depending on the differential electric power may be generated.

### (Embodiment 2)

In Embodiment 1, the configuration that the control device 30 is provided at the discharge device 20 is described as an example. On the other hand, in the present embodiment, as shown in FIG. 5, a configuration example is described, where a control device 30 is divided to two parts: a first control device 30A; and a second control device 30B, and the first control device 30A is provided separately from a discharge device 20. The first control device 30A includes a memory 33, an acquisition portion 34 and a collation portion 35, and communicates with the discharge device 20. The second control device 30B includes an adjustment portion 32, and is provided at the discharge device 20. The first control device 30A is provided at a communication device 60, such as an independent server or a distributed server configured as a cloud computing system. Note that, a configuration regarding communication between the first control device 30A and the second control device 30B is omitted from the figure.

In this configuration, when an electric vehicle 40 is connected to the discharge device 20 so that power of a battery 41 can be supplied to a power wiring 50, the discharge device 20 informs the second control device 30B provided at the communication device 60 of the connection of the electric vehicle 40. When receiving the information regarding the connection of the electric vehicle 40, the acquisition portion 34 of the second control device 30B acquires second identification information that is information for identifying the electric vehicle 40. The collation portion 35 then collates the second identification information with second identification information stored in the memory 33. First identification information corresponding to the second identification information is accordingly extracted, and a facility 1 (meter device 10) of a user having the electric vehicle 40 is identified.

A subsequent processing is similar to that of Embodiment 1, and information regarding an amount of power during a predetermined period is acquired from the corresponding meter device 10 via a communication portion 31, and then the acquired information regarding the amount of power is reported to the adjustment portion 32. The adjustment portion 32 receives, from the first control device 30A, information regarding the amount of power received by the facility 1, and then instructs a discharge control portion 22 to adjust an amount of power to be supplied to the power wiring 50 from the battery 41.

In the configuration example described above, it is assumed that the consumer's facility 1 and the discharge device 20 are managed by a same electric utility (or service provider). However, when the consumer's facility 1 and the discharge device 20 are respectively managed by different electric utilities (or service providers), the following processing is performed.

In this case, a communication device 60 is configured to be capable of communicating with the other communication device(s) 60. The other communication device 60 includes a communication device 60 managed by an electric utility (or service provider) that is different from an electric utility (or service provider) managing the discharge device 20. When the electric vehicle 40 is connected to the discharge device 20 and the second identification information is reported to the first control device 30A, the collation portion 35 collates the second identification information with second identification information stored in the memory 33. If the second identification information is not stored in the memory 33, the second identification information is reported to the other communication device 60 to confirm whether or not it is stored in the other communication device 60.

If the second identification information is stored in the memory 33 of the other communication device 60, the communication device 60 communicating with the discharge device 20 acquires, from the other communication device 60, information regarding an amount of power measured by the corresponding meter device 10. A subsequent processing is similar to the processing described above, and the discharge device 20 supplies power to the power wiring 50 in accordance with an amount of power received by the consumer's facility 1.

The differential electric power is calculated by a communication device 60 that manages the discharge device 20, and reported to a communication device 60 that manages the facility 1. Accordingly, it means that the electricity price follows an electricity rate system of an electric utility (or service provider) with which a user of the facility 1 makes a contract. Note that, it is also applied to a case of using a charge device for charging the battery 41 instead of the discharge device 20. That is, a communication device 60 that manages the charge device acquires an amount of power with which the battery 41 (storage battery) has been charged, and reports this amount to a communication device 60 operated by an electric utility (or service provider) with which a user having the electric vehicle 40 (i.e., a user of the facility 1) makes a contract. Therefore, it is possible to charge, to the user of the facility 1, the electricity price with respect to the amount of power with which the battery 41 has been charged. The electricity price in this case also follows an electricity rate system of an electric utility (or service provider) with which the user of the facility 1 makes a contract. Other configurations and operations are similar to those of Embodiment 1.

## Claims

1. A power supply system, comprising:
a meter device that measures an amount of electric power received by a facility of a consumer from a power grid;
a discharge device that supplies, to a power wiring, electric power of a battery for travelling, which is mounted in an electric vehicle; and
a control device that controls the discharge device so as to adjust an amount of electric power to be supplied to the power wiring from the battery, wherein
the control device comprises:
a communication portion that acquires, through communication with the meter device, information regarding an amount of electric power measured by the meter device; and
an adjustment portion that adjusts the amount of electric power to be supplied from the battery to the power wiring so as to be equal to an amount of electric power corresponding to at least part of the amount of electric power measured by the meter device.

2. The power supply system of claim 1, wherein
the control device further comprises:
a memory that stores first identification information for identifying the facility of the consumer and second identification information for identifying the electric vehicle in association with each other;
an acquisition portion that acquires the second identification information from the electric vehicle when the electric vehicle is connected to the discharge device; and
a collation portion that collates the second identification information acquired by the acquisition portion with the second identification information stored in the memory to identify the facility of the consumer having the first identification information associated with the second identification information stored in the memory, and
the adjustment portion is configured to adjust the amount of electric power to be supplied from the battery to the power wiring so as to be equal to an amount of electric power corresponding to at least part of an amount of electric power received by the facility of the consumer that is identified by the collation portion.

3. The power supply system of claim 2, wherein
the control device further comprises:
a first control device that includes the memory, the acquisition portion and the collation portion; and
a second control device that includes the adjustment portion, and is to be attached to the discharge device.

4. The power supply system of claim 2 or 3, wherein
the acquisition portion has a function of acquiring an identification information used for an electronic toll collection system, and
the identification information used for the electronic toll collection system is defined as the second identification information.

5. The power supply system of any one of claims 1 to 4, wherein
the adjustment portion is configured to adjust, as a target, the amount of electric power to be supplied to the power wiring from the battery during a predetermined period so as to make the amount of electric power to be supplied to the power wiring from the battery equal to the amount of electric power measured by the meter device.

6. The power supply system of claim 5, wherein
the control device further comprises:
a first arithmetic portion that calculates a differential electric power corresponding to a difference between the amount of electric power supplied to the power wiring from the battery and the amount of electric power measured by the meter device during the predetermined period; and
a second arithmetic portion that reflects the differential electric power calculated by the first arithmetic portion to an electricity price.

7. The power supply system of any one of claims 1 to 6, wherein
the control device further comprises a limitation portion that limits at least one of a rate of change or a peak value, of the electric power to be supplied to the power wiring from the electric vehicle.

8. The power supply system of any one of claims 1 to 7, wherein
the control device further comprises:
a setting portion that sets a lower limit regarding a remaining capacity of the battery; and
a management portion that stops supplying of electric power to the power wiring from the battery when the remaining capacity of the battery has reached the lower limit.

9. The power supply system of claim 8, wherein
when receiving information regarding a planned travel distance for the electric vehicle, the setting portion has functions of: calculating the remaining part of the battery required to travel the planned travel distance; and setting the lower limit based on a calculated remaining capacity of the battery.

10. The power supply system of any one of claims 1 to 9, wherein
the discharge device is arranged away from the facility of the consumer, the discharge device being electrically connected to the power grid through the power wiring, and also electrically connected to the battery.

11. A discharge device to be used for the power supply system of any one of claims 1 to 10, the discharge device comprising the adjustment portion.
